# EUROPEAN PATENT SPECIFICATION

(11) **EP 1 749 655 B1**
(45) Date of publication and mention of the grant of the patent: **10.09.2008**
(21) Application number: 06118141.8
(22) Date of filing: 28.07.2006
(51) Int. Cl.: B32B 7/06, B32B 27/08, B65D 65/40

(54) **Multilayer Coextruded Films Including Frangible Intralaminar Bonding Forces**
Coextrudierte Mehrschichtfolien mit geringen Bindungskräften zwischen zwei Schichten
Films multicouches coextrudés ayant des forces de liaison intralaminaires frangibles

(30) Priority: 05.08.2005 US 198809
(43) Date of publication of application: 07.02.2007
(73) Proprietor: CURWOOD, INC., Oshkosh, Wisconsin 54904 (US)
(72) Inventor: Busche, David A, Neenah, WI 54956 (US); Pockat, Gregory R, Ripon, WI 54971 (US)
(74) Representative: Eddowes, Simon

(56) References cited:
- EP-A2- 0 800 915
- EP-A2- 0 916 482
- EP-A2- 1 541 335
- WO-A-99/54120
- WO-A2-02/062575
- WO-A2-03/022573
- US-A- 5 491 009
- US-B1- 6 355 732
- US-B1- 6 582 828

## Description

### BACKGROUND OF THE INVENTION

The present disclosure relates to multilayer thermoplastic film structures for packaging film applications. Particularly, the disclosure relates to multilayer coextruded packaging films including frangible intralaminar bonding that allows packages made therefrom to be opened with manual forces.

Multilayer thermoplastic film structures are used to package food and medicinal articles, to protect the articles against external contamination and abuse, and to provide an attractive package for the article for its eventual sale. There is great commercial interest in the packaging industry for a multilayer film structure that provides superior mechanical strength, better optical and gas barrier properties, and improved means for opening packages without the aid of a knife or cutting implement or without uncontrolled or random tearing. Packaging films including one or more of these properties that is openable without uncontrolled rupturing of the packaging materials, e.g., away from the seal area, that may result in opening in an undesired location or in sudden destruction of the package and inadvertent contamination or spillage of the contents are desired.

WO02/062575 discloses a peelably sealed package including a web having a peelable layer and a substrate having a surface layer. The peelable layer includes a blend of: i) from about 3 to about 15 weight parts polybutylene, ii) from about 40 to about 75 weights part ionomer, and iii) from about 20 to about 55 weight parts ethylene/unsaturated ester copolymer. The surface layer of the substrate includes a polyethylene having a density of from about 0.915 to about 0.93 g/cc, an ionomer, or a mixture of these polymers. The peelable layer of the web and the surface layer of the substrate are peelably sealed to each layer in one or more selected areas.

WO/03/022573 discloses a multilayer polymeric film structure, specifically a seven layer non-EVOH structure having six layers of alternating nylon and adhesive, and a seventh layer of a heat sealable polymer. Either the sixth layer comprising the adhesive or the seventh layer coprising the heat sealable polymer may further comprise a polymer that may allow film structure to be easily peelable when heat sealed.

### SUMMARY OF THE DISCLOSURE

The present invention provides a multilayer coextruded thermoplastic film structure comprising in the following order:
a) a first layer comprising a polymer sealant material;
b) a second layer comprising a frangible polymer blend;
c) a third layer comprising an adhesive material;
d) a fourth layer comprising a nylon;
e) a fifth layer comprising a material selected from an adhesive material or an oxygen gas barrier material;
f) a sixth layer comprising a nylon;
g) a seventh layer comprising an adhesive material; and
h) an eighth layer comprising a material selected from polyethylene, polypropylene, polyester, nylon or blends and copolymers thereof;
wherein said first layer is coextruded with said second through eighth layers, said first layer comprises from 1% to 10% of the total thickness of said coextruded film structures; said first layer has a thickness uniformity deviation of less than 20% of the average thickness of said first layer; said second layer has a maximum thickness of 12.7µm (0.5 mils.); and said multilayer film structure has a peel strength of less than 0.77N per mm(2000 grams per inch) as measured in accordance with ASTM F-904 test method when peeled from a second film structure to which said multilayer film structure has been heat-sealed.

### BRIEF DESCRIPTION OF THE DRAWINGS

**FIG. 1** is a cross-sectional view of a multilayer structure having eight layers according to the present disclosure.

**FIG. 2** is a cross-sectional view of a multilayer structure having eight layers according to the present disclosure.

**FIG. 3** is a cross-sectional view of a multilayer structure having nine layers according to the present disclosure.

**FIG. 4** is a cross-sectional view of a multilayer structure having nine layers according to the present disclosure.

### DETAILED DESCRIPTION OF THE DISCLOSURE

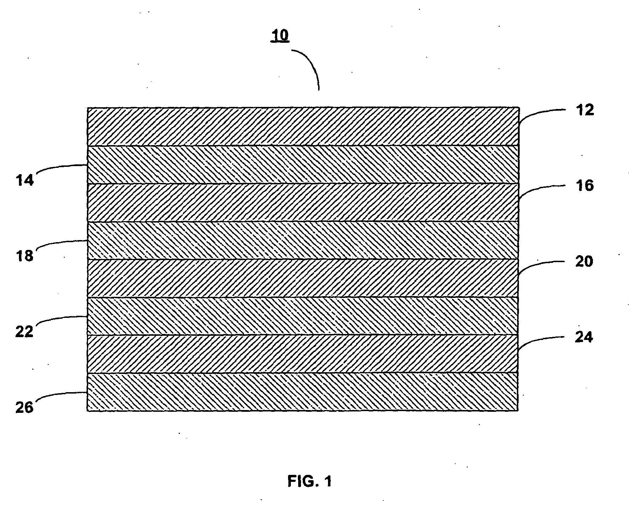

With reference to the drawings, there is seen in **FIG.1** a multilayer film structure 10 having a first layer 12, a second layer 14, a third layer 16, a fourth layer 18, a fifth layer 20, a sixth layer 22, a seventh layer 24 and an eighth layer 26. First layer 12 of the multilayer film structure 10 comprises a polymer sealant material. As used herein, the term "sealant" refers to a layer which is heat sealable to itself or other layers, i.e., is capable of fusion bonding by conventional indirect heating means which generate sufficient heat on at least one film contact surface for conduction to the contiguous film contact surface and formation of a bond interface therebetween without loss of the film integrity. Advantageously, the bond interface must be sufficiently thermally stable to prevent gas or liquid leakage therethrough.

Examples of suitable polymer sealant materials for the first layer **12** include a sealant selected from a group consisting of ionomer, polyethylene, including heterogeneous ethylene-alpha olefin copolymer, homogeneous ethylene-alpha olefin copolymer, low-density polyethylene (LDPE), linear low-density polyethylene (LLDPE), and ultra low-density polyethylene (ULDPE), ethylene vinyl acetate copolymer (EVA), ethylene methyl acrylate copolymer, ethylene propylene copolymer, polypropylene homopolymer and copolymer, polybutylene homopolymer and copolymer, propylene-alpha olefin copolymers, polyethylene terephthalate, nylon, and blends thereof.

The second layer **14** is a frangible polymer blend selected to provide the multilayer film structure **10** with an internally frangible failure mechanism. The second layer **14** has a maximum thickness of 12.7 µm (0.5 mils.) and preferably comprises from 1% to 20% of the total thickness of the multilayer structure. The second layer **14** comprises a polymer blend of at least a first polymeric component and a second polymeric component selected such that the interfacial bond forces between the second layer **14** and the first layer **12,** or between the second layer **14** and the third layer **16,** or the internal cohesive bond within the blend are lower than a heat seal formed between the first layer **12** and a sealant layer of another film to which the multilayer film structure **10** is ultimately sealed. The first polymeric component may be selected from polyolefin, such as polyethylene which includes, but is not limited to, low-density polyethylene, linear low-density polyethylene, ultra low-density polyethylene, medium-density polyethylene, ethylene-alpha olefin copolymers (EAO), cyclic olefin copolymers (COC), ethylene vinyl esters, especially ethylene vinyl acetate copolymers (EVA), ionomer, adhesive material and blends thereof. An adhesive material, as used herein, refers to any polymeric material serving a primary purpose or function of adhering two surfaces to one another. In the present invention, an adhesive material may adhere one film layer surface to another film layer surface (presumably, across their entire surface areas). The adhesive material may comprise any polymer, copolymer or blend of polymers having a polar group thereon, or any other polymer, homopolymer, copolymer or blend of polymers including modified and unmodified polymers, e.g., grafted copolymers, which provide sufficient interlayer adhesion to adjacent layers comprising otherwise non-adhering polymers. Adhesive materials may include, but are not limited to, modified and unmodified homopolymer or copolymer of polyolefin, preferably modified polyethylene, and modified or unmodified homopolymer or copolymer of alkyl acrylates such as methyl acrylate, ethyl acrylate, n-butyl acrylate. Preferably, the first polymeric component is selected from EVA, ionomer, and ultra low-density polyethylene.

The second polymeric component of the second layer **14** is selected from materials that modify the bonding characteristics of the second layer **14** to create an internal frangible structure. The second polymeric component may be selected from polybutylene, polypropylene, high-density polyethylene or any suitable extrudable polymer that provides the second layer **14** with the desired properties. Preferably, the second polymeric component is polybutylene. A particularly preferred second layer **14** comprises EVA and polybutylene. The second layer **14** preferably comprises from about 5% by weight to about 30% by weight of second polymeric component. Preferably, a blend of about 85% by weight of the first polymeric component to about 15% by weight of the second polymeric component is used.

The third layer **16** is an adhesive material selected from the group consisting of a modified or unmodified homopolymer or copolymer of polyethylene, especially ethylene copolymers, alkyl acrylates such as methyl acrylate, ethyl acrylate, n-butyl acrylate, or vinyl esters such as ethylene vinyl acetate, especially ethylene vinyl acetate copolymers, ethylene-alpha olefin (EAO) and blends thereof. The third layer **16** functions as an adhesive for bonding the second layer **14** and the fourth layer **18** together. The third layer functions as a bonding layer, i.e., to bond second layer **14** to fourth layer **18.** Preferably the second and fourth layers **14** and **18** contact opposing sides of the third layer, but optionally one or more additional layers may be coextruded between the third and fourth layers **16** and **18,** or the second and third layers **14** and **16.** Examples of suitable commercially available adhesives are sold by Rohm and Haas, Philadelphia, Pennsylvania, U.S.A., under the trademark TYMOR® 72X06; Mitsui Petrochemical Industries, Ltd. of Tokyo, Japan, under the trademark ADMER^{™} SF700; and du Pont de Nemours and Company, Wilmington, Delaware, U.S.A., under the trademark BYNEL® 41E687.

"Olefin" is used herein broadly to include polymers such as polyethylene, ethylene copolymers having a small amount of a copolymer such as vinyl acetate, ethylene-alpha olefin copolymers (LLDPE), polypropylene, polybutene, and other polymeric resins falling in the "olefin" family classification. The term "modified", as used herein, refers to a chemical derivative, e.g., one having any form of anhydride functionality, such as anhydride of maleic acid, crotonic acid, citraconic acid, itaconic acid, fumaric acid, etc., whether grafted onto a polymer, copolymerized with a polymer, or blended with one or more polymers, and is also inclusive of derivatives of such functionalities, such as acids, esters, and metal salts derived therefrom.

The fourth layer **18** comprises nylon or nylon blend. Nylons suitable for use as the fourth layer **18** include nylon homopolymers and copolymers which may include, but are not limited to, a nylon selected from the group consisting of nylon 4,6 (poly(tetramethylene adipamide)), nylon 6 (polycaprolactam), nylon 6,6 (poly(hexamethylene adipamide)), nylon 6,9 (poly(hexamethylene nonanediamide)), nylon 6,10 (poly(hexamethylene sebacamide)), nylon 6,12 (poly(hexamethylene dodecanediamide)), nylon 6/12 (poly(caprolactam-co-dodecanediamide)), nylon 6,6/6 (poly(hexamethylene adipamide-co-caprolactam)), nylon 11 (polyundecanalactam), nylon 12 (polyauryllactam) and alloys or mixtures thereof. As used herein, terminology employing a "/" with respect to the chemical identity of any copolymer, e.g., nylon 6/12 (poly(caprolactam-co-dodecanediamide)), identifies the comonomers, in this case, caprolactam and dodecanediamide, which are copolymerized to produce the copolymer. It is appreciated by a person of ordinary skill in the art that the term "copolymer" refers to those copolymers where the first listed comonomer is polymerized in a higher weight percentage than the second listed comonomer.

Preferably, the third layer comprises between about 100% (wt.) to about 71% (wt.) of a nylon selected from the group consisting of nylon 4,6 (poly(tetramethylene adipamide)), nylon 6 (polycaprolactam), nylon 6,6 (poly(hexamethylene adipamide)), nylon 6,9 (poly(hexamethylene nonanediamide)), nylon 6,10 (poly(hexamethylene sebacamide)), nylon 6,12 (poly(hexamethylene dodecanediamide)), nylon 6/12 (poly(caprolactam-co-do-decanediamide)), nylon 6,6/6 (poly(hexamethylene adipamide-co-caprolactam)), nylon 11 (polyundecanolactam), nylon 12 (polyauryllactam) and alloys or mixtures thereof, blended with between about 0% (wt.) to about 29% (wt.) of an amorphous nylon. The generic source-based nomenclature convention is used to name the hereinabove nylon polymers and copolymers. See, "Generic Source-Based Nomenclature for Polymers," Pure Applied Chemistry, Vol. 73, No. 9, pp. 1511-1519 (International Union of Pure and Applied Chemistry 2001). Examples of commercially available nylons are sold under the trademarks ULTRAMID® C35 or ULTRAMID® B36 from BASF, Mount Olive, N.J., U.S.A., and 66 ZYTEL® 42A NCO10 from du Pont de Nemours and Company, Wilmington, Delaware, U.S.A. A commercial example of an amorphous nylon is sold under the trademark SELAR® PA 3426 from du Pont de Nemours and Company, Wilmington, Delaware, U.S.A.

As used herein, the term "amorphous nylon" refers to nylons with an absence of a regular three-dimensional arrangement of molecules or subunits of molecules extending over distances, which are large relative to atomic dimensions. However, regularity of structure exists on a local scale. See, "Amorphous Polymers," Encyclopedia of Polymer Science and Engineering, 2nd Ed., pp. 789-842 (John Wiley & Sons, Inc. 1985). In particular, the term "amorphous polyamide," as used with respect to the present invention, refers to a material recognized by one skilled in the art of differential scanning calorimetry (DSC) as having no measurable melting point (less than 0.5 cal/g) or no heat of fusion as measured by DSC using ASTM 3417-83. Such nylons include those amorphous nylons prepared from condensation polymerization reactions of diamines with diacarboxylic acids.

The fifth layer **20** comprises a gas barrier layer. The fifth layer **20** is preferably an oxygen barrier layer selected from ethylene vinyl alcohol copolymer, polyvinylidene chloride copolymers, polyacrylonitrile, acrylonitrile copolymer, and blends thereof. A preferred oxygen barrier is an ethylene vinyl alcohol copolymer, which is commercially available under the trademark SOARNOL ET3803 obtained from The Nippon Synthetic Chemical Industry Company, Ltd. (Nippon Gohsei), Osaka, Japan. A noteworthy characteristic of the multilayer film structure **10** where the fifth layer **20** is an oxygen barrier is that the film exhibits excellent oxygen barrier properties. It is appreciated by a person of ordinary skill in the art that a desirable oxygen property is one which minimizes the transmission of oxygen through the film. Oxygen permeation resistance or barrier may be measured using the procedure of ASTM D-3985 which method is hereby incorporated by reference. Accordingly, the multilayer film structure **10** formed into a flexible film where the fifth layer **20** is an oxygen barrier has an oxygen transmission rate less than about 15.5 cc/m² for 24 hours at 1 atmosphere.

The sixth layer **22** of multilayer film structure **10** comprises a nylon or nylon blend. The sixth layer **22** comprises a nylon selected form the group consisting of nylon 4,6 (poly(tetramethylene adipamide)), nylon 6 (polycaprolactam), nylon 6,6 (poly(hexamethylene adipamide)), nylon 6,9 (poly(hexamethylene nonanediamide)), nylon 6,10 (poly(hexamethylene sebacamide)), nylon 6,12 (poly(hexamethylene dodecanediamide)), nylon 6/12 (poly(caprolactam-co-do-decanediamide)), nylon 6,6/6 (poly(hexamethylene adipamide-co-caprolactam)), nylon 11 (polyundecanolactam), nylon 12 (polyauryllactam) and alloys or mixtures thereof. Preferably, the sixth layer **22** is a blend of between about 100% (wt.) to about 71% (wt.) of a nylon selected form the group consisting of nylon 4,6 (poly(tetramethylene adipamide)), nylon 6 (polycaprolactam), nylon 6,6 (poly(hexamethylene adipamide)), nylon 6,9 (poly(hexamethylene nonanediamide)), nylon 6,10 (poly(hexamethylene sebacamide)), nylon 6,12 (poly(hexamethylene dodecanediamide)), nylon 6/12 (poly(caprolactam-co-dodecanediamide)), nylon 6,6/6 (poly(hexamethylene adipamide-co-caprolactam)), nylon I I (polyundecanolactam), nylon 12 (polyauryllactam) and alloys or mixtures thereof; and between about 0% (wt.) to about 29% (wt.) of an amorphous nylon.

The seventh layer **24** of multilayer film structure **10** comprises an adhesive material. The seventh layer **24** functions as an adhesive for bonding the sixth layer **22** and the eighth layer **26** together. Suitable materials for use as an adhesive are selected from a group consisting of modified or unmodified homopolymer or copolymer of polyethylene, especially ethylene copolymers, alkyl acrylates such as methyl acrylate, ethyl acrylate, n-butyl acrylate, or vinyl esters such as vinyl acetate, especially ethylene vinyl acetate copolymers (EVA), ethylene-alpha olefin (EAO) and blends thereof. Preferred adhesives are similar to those useful in the third layer and may include anhydride and/or rubber modified EVAs and EAOs. An example of a commercially available material is sold under the trademark BYNEL® 41E687 from du Pont de Nemours and Company, Wilmington, Delaware, U.S.A.

The eighth layer **26** comprises a polymer selected from nylon, polyethylene, polypropylene, polyester and blends and copolymers thereof. In one aspect, the eighth layer **26** comprises nylon or a nylon blend. In this aspect, the eighth layer **26** comprises a nylon selected form the group consisting of nylon 4,6 (poly(tetramethylene adipamide)), nylon 6 (polycaprolactam), nylon 6,6 (poly(hexamethylene adipamide)), nylon 6,9 (poly(hexamethylene nonanediamide)), nylon 6,10 (poly(hexamethylene sebacamide)), nylon 6,12 (poly(hexamethylene dodecanediamide)), nylon 6/12 (poly(caprolactam-co-dodecanediamide)), nylon 6,6/6 (poly(hexamethylene adipamide-co-caprolactam)), nylon I 1 (polyundecanolactam), nylon 12 (polyauryllactam) and alloys or mixtures thereof. Preferably, the eighth layer 26 is a blend of between about 100% (wt.) to about 71 % (wt.) of a nylon selected from the group consisting of nylon 4,6 (poly(tetramethylene adipamide)), nylon 6 (polycaprolactam), nylon 6,6 (poly(hexamethylene adipamide)), nylon 6,9 (poly(hexamethylene nonanediamide)), nylon 6,10 (poly(hexamethylene sebacamide)), nylon 6,12 (poly(hexamethylene dodecanediamide)), nylon 6/12 (poly(caprolactam-co-do-decanediamide)), nylon 6,6/6 (poly(hexamethylene adipamide-co-caprolactam)), nylon 11 (polyundecanolactam), nylon 12 (polyauryllactam) and alloys or mixtures thereof; and between about 0% (wt.) to about 29% (wt.) of an amorphous nylon similar to that disclosed for the fourth and sixth layers **18** and **22.**

In another aspect, eighth layer **26** preferably comprises a polyester. As used herein, the term "polyester" refers to a synthetic homopolymers and copolymers having an ester linkage between monomer units which may be formed by condensation polymerization methods. Polymers of this type are preferable aromatic polyesters and more preferable, homopolymers and copolymers of poly(ethylene terephthalate), poly(ethylene naphthalate) and blends thereof. Suitable aromatic polyesters may have an intrinsic viscosity between 0.60 to 1.0, preferably between 0.60 to 0.80. When the eighth layer 26 comprises polyester, it provides superior dimensional stability to the film for subsequent processing, including subsequent thermoforming processes, and can serve as a surface layer in the film structure. Examples of preferred polyesters are available under the trademarks EASTAPAK® PET Polyester 9663, EASTPAK® Polymer 9921 and EASTAR® Copolyester 6763, all from Eastman Chemical Company, Kingsport, Tennessee, U.S.A.

In still another aspect, eighth layer **26** preferably comprises polypropylene. An example of a commercially available polypropylene suitable for use in the present invention is sold under the trademark BP Amoco ACCLEAR® 6219 from Innovene, Chicago, Illinois, U.S.A.

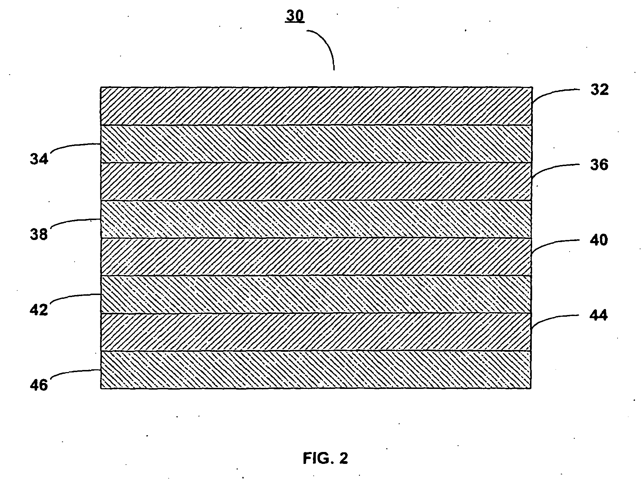

Small amounts of additives such as slip or anti-block agents, pigments, processing aids and the like can be included in any of the layers in the multilayer film structure 10 or in any layers further added to this structure which is formed into a flexible film. Similarly, such additives may also be include in any of the layers discussed below in connection with multilayer film structures **30, 50,** and **70** illustrated in **FIGS. 2-4** respectively.

Turning now to **FIG. 2****,** there is illustrated a multilayer film structure **30** having a first layer **32,** a second layer **34,** a third layer **36,** a fourth layer **38,** a fifth layer **40,** a sixth layer **42,** a seventh layer **44** and an eighth layer **46.** First layer **32,** second layer **34,** third layer **36,** fourth layer **38,** sixth layer **42,** seventh layer **44** and eighth layer **46** may be selected from the same materials as disclosed in connection with their counterparts in multilayer film structure **10** discussed above. In multilayer film structure **30,** the fifth layer **40** comprises an adhesive material. The fifth layer **40** functions as an adhesive for bonding the fourth layer **38** and the sixth layer **42** together. Suitable materials for use as an adhesive are selected from a group consisting of modified or unmodified homopolymer or copolymer of polyethylene, especially ethylene copolymers, alkyl acrylates such as methyl acrylate, ethyl acrylate, n-butyl acrylate, or vinyl esters such as vinyl acetate, especially ethylene vinyl acetate copolymers (EVA), ethylene-alpha olefin (EAO) and blends thereof. Preferred adhesives are similar to those useful in the third layer and may include anhydride and/or rubber modified EVAs and EAOs. An example of a commercially available material is sold under the trademark BYNEL® 41E687 from du Pont de Nemours and Company, Wilmington, Delaware, U.S.A.

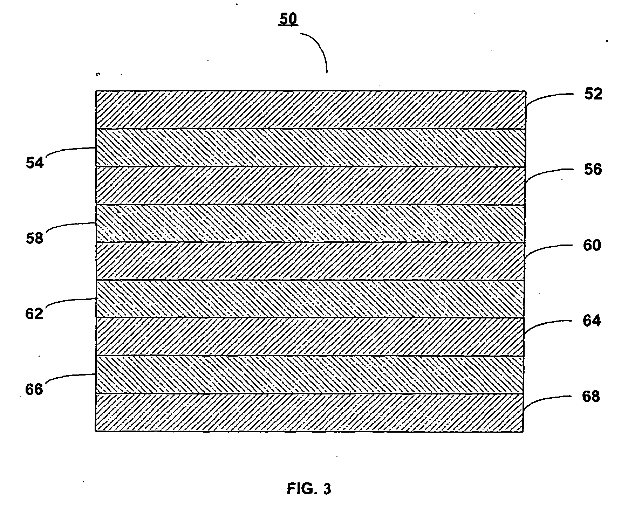

In **FIG. 3****,** a nine-layer film structure **50** is shown having a first layer **52,** a second layer **54,** a third layer **56,** a fourth layer **58,** a fifth layer **60,** a sixth layer **62,** a seventh layer **64,** an eighth layer **66** and a ninth layer **68.** The fourth layer **58,** fifth layer **60,** sixth layer **62,** seventh layer **64,** eighth layer **66** and ninth layer **68** correspond to and may be selected according to the disclosure of the third through eighth layer **16-26** of multilayer film structure **10** above. The composition of the first layer **52** and second layer **54** also correspond to and may be selected from the materials disclosed above for the first layer and second layer **12** and **14** of multilayer film structure **10.** Structure **50** includes third layer **56** comprising a polyolefin. Polyolefin broadly includes polymers such as polyethylene, ethylene copolymers having a small amount of a copolymer such as vinyl acetate, ethylene-alpha olefin copolymers (LLDPE), polypropylene, polybutene, and blends and copolymers thereof and other polymeric resins falling in the "olefin" family classification.

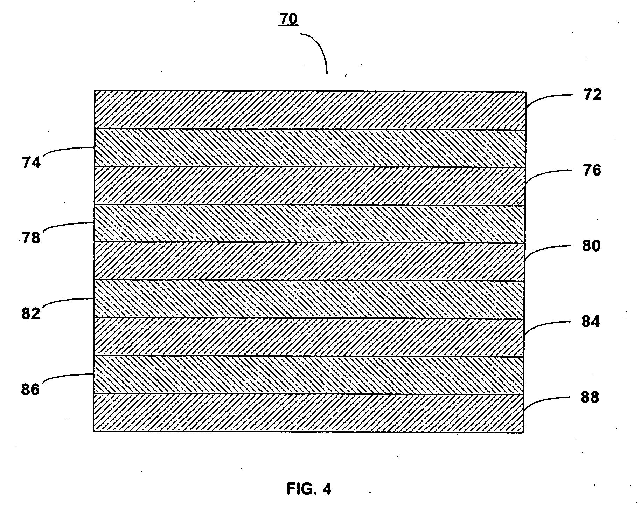

Turning now to **FIG. 4****,** there is shown a multilayer film structure **70** having a first layer **72,** a second layer **74,** a third layer **76,** a fourth layer **78,** a fifth layer **80,** a sixth layer **82,** a seventh layer **84,** an eighth layer **86** and a ninth layer **88.** The fourth layer **78,** fifth layer **80,** sixth layer **82,** seventh layer **84,** eighth layer **86** and ninth layer **88** correspond to and may be selected according to the disclosure of the third through eighth layer **36-46** of multilayer film structure **30** above. The composition of the first layer **72** and second layer **74** also correspond to and may be selected from the materials disclosed above for the first layer and second layer **12** and **14** of multilayer film structure **10.** Multilayer film structure **70** also includes a third layer **76** comprising a polyolefin.

The multilayer film structures **10, 30, 50** and **70** formed into a flexible film preferably are non-oriented and have a heat shrinkage value of less than about 5% at 90° C., preferably less than about 2% at 90° C. Heat shrinkage test is defined to be values obtained by measuring unrestrained shrink at 90° C. for five seconds. Four test specimens are cut to 10 cm. in the machine direction by 10 cm. in the transverse direction. Each specimen is completely immersed for 5 seconds in a 90° C. water bath (or other specified non-reactive liquid). The distance between the ends of the shrunken specimen is measured. The difference in the measured distance for the shrunken specimen and the original 10 cm. is multiplied by ten to obtain the percent of shrinkage for the specimen for each direction. The machine direction shrinkage for the four specimens is averaged for the machine direction shrinkage value of the given film sample, and the transverse direction shrinkage for the four specimens is averaged for the transverse direction shrinkage value.

It is also preferred that the multilayer film structures **10, 30, 50** and **70** formed into a flexible film have an elongation at break at room temperature of greater than about 250% in either or both the machine direction and in the transverse direction. The percent elongation at break may be measured by following the procedure as outlined by ASTM D-882, Method A which method is hereby incorporated by reference.

According to the present disclosure, the multilayer film structures may advantageously be formed into a flexible film containing less than 500 ppm of a transition-metal salt selected from the group consisting of manganese II, manganese III, iron II, iron III, cobalt II, cobalt III, nickel II, nickel III, copper I, copper II, rhodium II, rhodium III, rhodium IV, and ruthenium.

Advantageously, the flexible films formed from multilayer film structures **10, 30, 50** and **70** of this disclosure provide superior optical properties, i.e., high gloss and low haze. Gloss may be measured using the test method described by ASTM D-2457 at a 45° angle which method is hereby incorporated by reference. According to the present invention, the multilayered structure 10 formed into a film has a gloss value greater than about 65 Hunter Units (HU).

While the present disclosure has described in detail embodiments having eight and nine layers, one of skill in the art will appreciate that additional layers may optionally be coextruded between any of the third layers through nine layers, and optionally to the exterior of the eighth and ninth layers, i.e., the eighth and ninth layers become internal layers with other layers adjacent those layers on the side opposite the first layer. In this regard, any number of layers may be provided so long as the interfacial stability is maintained by formation of the first and second layers as outlined above.

Multilayer film structures **10, 30, 50** and **70** are formed via a coextrusion process. Multilayer film structures may be formed by combining different streams of melt-plastified polymers into a single structure by slot or flat cast or blown bubble coextrusion. The flat die or slot cast process includes extruding polymer streams through a flat or slot die onto a chilled roll and subsequently winding the film onto a core to form a roll of film for further processing. In the blown bubble coextrusion process, streams of melt-plastified polymers are forced through an annular die having a central mandrel to form a tubular extrudate. The tubular extrudate is preferably expanded to a desired wall thickness by a volume of air or other gas entering the hollow interior of the extrudate via the mandrel, and then rapidly cooled or quenched by any of various methods known to those of skill in the art.

Preferably, the films of the present disclosure, such as multilayer film structures **10, 30, 50** and **70,** are formed using a single-bubble blown film apparatus and method. The single-bubble blown film apparatus includes a multi-manifold annular die head for bubble blown film through which the film composition is forced and formed into a substantially cylindrical bubble. The bubble is immediately quenched, e.g., via cooled water bath, solid surface and/or air, and then ultimately collapsed and formed into a film. Each layer is melt-plastified in a separate extruder (although a single extruder may supply the same composition to multiple layers) connected to the annular coextrusion die from which the heat plastified layers are coextruded forming the tube or bubble.

In accordance with the present disclosure, the multilayered structures **10, 30, 50** and **70** formed into a flexible film have a thickness less than 381 µm (15 mils), more preferably less than 254 µm (10 mils), and most preferably, from 76.2 µm (3 mils) to 177.8 µm (7 mils). The first layers **12, 32, 52,** and **72** have a total thickness of less than 6.35 µm (0.25 mils) and comprise from 1% to 10% of the total film thickness, with the first layers **12, 32, 52** and **72** having a thickness uniformity deviation of less than 20% of the average thickness of the first layer.

The multilayer film structures are preferably formed into packages by heat sealing with a second structure including a heat sealable material that forms a bond with the first layer having a strength greater than the weakest bond strength between the first and second layers, the second and third layers, or the internal cohesive strength of the second layer. As such, when the multilayer film structure is manually peeled from the second structure, the first layer remains sealed to the second structure in the area of the heat seal, and fractures such that the peel failure propagates internally within the zone from the first layer/second layer interface to the second layer/third layer interface. Preferably, the second structure does not include an internal frangible failure mechanism, but packages may be forming package walls from two separate multilayer films structures according to the present disclosure or folding a single sheet as known by those of skill in the art. Advantageously, packages may be formed from a single supply of multilayer films structures according to the present disclosure by incorporating lap seals, i.e., the first layer is heat-sealed to a compatible opposite exterior layer.

Applicants have found that the multilayer film structures disclosed herein overcome the deficiencies of the prior art multilayer film structures including an internal frangible failure mechanism. Prior structures incorporating a frangible adhesive layer adjacent to internal nylon layers required sealant and frangible adhesive layers of excessive thickness to overcome interfacial instability problems between those layers. Interfacial instability leads to undesirable optical characteristics such as haze and loss of clarity. Increased layer thickness for the sealant layer and frangible adhesive layer creates non-uniform failures and can lead to stringing or webbing of the film when manually pealed from a second film. The applicants have overcome these problems by providing an intermediate layer between the frangible adhesive layer and the third layer, which allows the multilayer film structures to incorporate optimum thickness ratios for the first layer and the frangible adhesive layer.

The disclosure will now be further described in the following, non-limiting example:

In the following examples, all film structures are produced using a single-bubble coextrusion apparatus and method. The single-bubble blown film apparatus includes a multi-manifold annular die head for blown bubble film through which the film composition is forced and formed into a cylindrical tube or bubble. The bubble is immediately quenched, e.g., via cooled water bath, solid surface and/or air, and then ultimately collapsed and formed into a film.

### EXAMPLE 1

The following resins are coextruded in the following structural relationship in accordance with **FIG. 3****:**

Layer **52:** first layer or sealant comprising 97% (wt.) linear low-density polyethylene (DOWLEX® 3010, The Dow Chemical Company, Midland, Michigan, U.S.A.) and 3% (wt.) antiblock, slip and processing additives and consisting of 1.8% of total weight of multilayer film structure **50;**

Layer **54:** second layer or frangible adhesive layer comprising 85% (wt.) EVA (Equistar NA442-051, Equistar Chemicals, LP, Houston, Texas, U.S.A.) and 15% (wt.) polybutylene (Shell 8640, Shell Chemicals USA, Houston, Texas, U.S.A.) and consisting of 6.3% of the total weight of multilayer film structure **50;**

Layer **56:** third layer of polyolefin comprising 100% (wt.) ULDPE (ATTANE® 4201G, The Dow Chemical Company, Midland, Michigan, U.S.A.);

Layer **58:** fourth layer of adhesive consisting of 12.6% of the total weight of multilayer film structure **50;**

Layer **60:** fifth layer of nylon blend comprising 85% nylon 6 having a density of 1.12 g/cm³, a melting point of a 220° C., a recrystallization temperature (as measured by deferential scanning calorimetry (DSC)) of 176° C., being available under the trademark ULTRAMID.RTM. B36 from BASF Corporation, Mount Olive, New Jersey, U.S.A.; and 15% (wt.) of an amorphous nylon having a density of 1.19 g/cm³, a glass transition temperature of 127° C., a heat deflection temperature at 66 psi of 126° C., and is sold under the trademark SELAR® PA 3426 by du Pont de Nemours and Company, Wilmington, Delaware, U.S.A., consisting of 14.7% of the total weight of multilayer film structure **50;**

Layer **62:** sixth layer or oxygen barrier comprising ethylene vinyl alcohol copolymer (EVOH) having a reported bulk density of 0.64-0.74 g/cm³, a relative density of 1.13-1.22 g/cm³, a melting point of 164-188° C., and is available under the trademark SOARNOL® ET 3803 from the Nippon Synthetic Chemical Industry Company, Ltd. (Nippon Gohsei), Osaka, Japan, consisting of 9.4% of the total weight of multilayer film structure **50;**

Layer **64:** seventh layer of nylon comprising same blend and wt. % as layer **60** above;

Layer **66:** eighth layer of adhesive consisting of 14.6% of the total weight of multilayer film structure **50;**

Layer **68:** ninth layer comprising a nylon blend of 77% (wt) ULTRAMID® B36 nylon 6, 15% (wt.) SELAR® PA 3426 and 8% (wt.) antiblock, slip and processing additives.

One extruder is used for each layer. Each extruder is connected to an annular coextrusion die from which heat plastified resins are coextruded forming a tube or single-bubble having seven layers. The resin or resin mixture is fed from a hopper into an attached single screw extruder where the heat plastified resin is formed and is subsequently extruded through a nine-layer coextrusion die into a tube or single-bubble. The bubble is maintained at a width of less than 1346 mm (53 inches). The extruded multilayer bubble is quenched against a cooled solid surface. The cooled bubble is flattened by passage through a pair of nip rollers and the resultant film has an average gauge between 16.2 µm to 127 µm (3 mil to 5 mil).

## Claims

1. A multilayer coextruded thermoplastic film structure comprising in the following order:
a) a first layer comprising a polymer sealant material;
b) a second layer comprising a frangible polymer blend;
c) a third layer comprising an adhesive material;
d) a fourth layer comprising a nylon;
e) a fifth layer comprising a material selected from an adhesive material or an oxygen gas barrier material;
f) a sixth layer comprising a nylon;
g) a seventh layer comprising an adhesive material; and
h) an eighth layer comprising a material selected from polyethylene, polypropylene, polyester, nylon or blends and copolymers thereof;
wherein said first layer is coextruded with said second through eighth layers, said first layer comprises from 1% to 10% of the total thickness of said coextruded film structure, said first layer has a thickness uniformity deviation of less than 20% of the average thickness of said first layer; said second layer has a maximum thickness of 12.7µm (0.5 mils.); and said multilayer film structure has a peel strength of less than 0.77N per mm(2000 grams per inch) as measured in accordance with ASTM F-904 test method when peeled from a second film structure to which said multilayer film structure has been heat-sealed.

2. A multilayer film structure as claimed in claim 1, wherein said film is produced by single-bubble or tubular blown coextrusion.

3. A multilayer film structure as claimed in claim 1 or claim 2, wherein said first layer is an exterior surface layer of said film and has a thickness of less than 3.81µm (0.15 mils.).

4. A multilayer film structure as claimed in any preceding claim, wherein said second layer is directly adhered to said first layer.

5. A multilayer film structure as claimed in any preceding claim, wherein said film has a thickness less than 381µm (15 mils.).

6. A multilayer film structure as claimed in claim 5, wherein said film has a thickness less than 254µm (10 mils.).

7. A multilayer film structure as claimed in claim 6, wherein said film has a thickness between 76.2µm (3 mils.) to 177.8µm (7 mils.).

8. A multilayer film structure as claimed in any preceding claim, wherein said film has a heat shrinkage value less than 5% in the machine direction at 90°C. and less than 5% in the transverse direction at 90°C. as measured in accordance with ASTMD-2732-96 test method.

9. A multilayer film structure as claimed in claim 8, wherein said film has a heat shrinkage value less than 2% in the machine direction at 90°C. and less than 2% in the transverse direction at 90°C. as measured in accordance with ASTMD-2732-96 test method.

10. A multilayer film structure as claimed in any preceding claim, wherein said film contains less than 500 ppm of a transition-metal salt selected from manganese II, manganese III, iron II, iron III, cobalt II,cobalt III, nickel II, nickel III,copper I, copper II, rhodium II, rhodium III, rhodium IV or ruthenium.

11. A multilayer film structure as claimed in any preceding claim, wherein said film has a gloss value greater than 65 Hunter Units (HU) as measured in accordance with ASTM D-523 test method.

12. A multilayer film structure as claimed in any preceding claim, wherein said eighth layer comprises polyester selected from a homopolymer or copolymer of an aromatic ester or a blend thereof.

13. A multilayer film structure as claimed in claim 12, wherein said eighth layer is selected from a homopolymer or copolymer of ethylene terephthalate, ethylene naphthalate or blends thereof.

14. A multilayer film structure as claimed in any of claims 1 to 11, wherein said eighth layer is a nylon selected from nylon 4,6 (poly(tetramethylene adipamide)),nylon 6(polycaprolactam), nylon 6,6 (poly(hexamethylene adipamide)), nylon 6,9(poly(hexamethylene nonanediamide)), nylon 6,10 (poly(hexamethylene sebacamide)),nylon 6,12(poly(hexamethylene dodecanediamide)), nylon 6/12 (poly(caprolactam-co-dodecanediamide)), nylon 6,6/6 (poly(hexamethylene adipamide-co-caprolactam)),nylon 11 (polyundecanolactam), nylon 12 (polyauryllactam) or alloys or mixtures thereof.

15. A multilayer film structure as claimed in claim 14, wherein said eighth layer is a blend of between 100% (wt.) to 71% (wt.) of a nylon selected from nylon 4,6 (poly(tetramethylene adipamide)), nylon 6(polycaprolactam), nylon 6,6 (poly(hexamethylene adipamide)), nylon 6,9(poly(hexamethylene nonanediamide)), nylon 6,10 (poly(hexamethylene sebacamide)),nylon 6,12 (poly(hexamethylene dodecanediamide)), nylon 6/12 (poly(caprolactam-co-dodecanediamide)), nylon 6,6/6 (poly(hexamethylene adipamide-co-caprolactam)), nylon 11 (polyundecanolactam), nylon 12 (polyauryllactam) or alloys or mixtures thereof; and between 0% (wt.) to 29% (wt.) of an amorphous nylon.

16. A multilayer film structure as claimed in any preceding claim, wherein said film comprises processing additives.

17. A multilayer film structure as claimed in any preceding claim, wherein said frangible polymer blend comprises a first polymeric component selected from polyethylene, EVA, ionomer, adhesive material or blends thereof and a second polymeric component selected from polybutylene, polyproplene, high-density polyethylene or blends thereof.

18. A multilayer film structure as claimed in claim 17, wherein said adhesive material is selected from a modified or unmodified homopolymer or copolymer of ethylene, methyl acrylate, ethyl acrylate, n-butyl acrylate, ethylene vinyl acetate, ethylene vinyl acetate copolymers, ethylene-alpha olefins or blends thereof.

19. A multilayer film structure as claimed in claim 17 or claim 18, wherein said second polymeric component is polybutylene.

20. A multilayer film structure as claimed in any of claims 17 to 19, wherein said first polymeric component comprises from 70% to 95% by weight of said second layer.

21. A multilayer film structure as claimed in any preceding claim, wherein said second layer comprises a blend of 85% by weight of a first polymeric component and 15% by weight polybutylene.

22. A multilayer film structure as claimed in any preceding claim, wherein said fifth layer is an oxygen gas barrier selected from ethylene vinyl alcohol copolymer, polyvinylidene chloride copolymer, polyacrylonitrile, acrylonitrile copolymer or blends thereof.

23. A multilayer film structure as claimed in any preceding claim, wherein said fourth and sixth layers are each independently selected form nylon 4,6 (poly(tetramethylene adipamide)), nylon 6 (polycaprolactam), nylon 6,6 (poly(hexamethylene adipamide)), nylon 6,9 (poly(hexamethylene nonanediamide)),nylon 6,10 (poly(hexamethylene sebacamide)), nylon 6,12 (poly(hexamethylene dodecanediamide)), nylon 6/12 (poly(caprolactam-co-do- decanediamide)), nylon 6,6/6 (poly(hexamethylene adipamide-co-caprolactam)), nylon 11 (polyundecanolactam), nylon 12 (polyauryllactam) or alloys or mixtures thereof.

24. A multilayer film structure as claimed in claim 23, wherein said fourth and sixth layers each independently comprises a blend between 100% (wt.) to 71% (wt.) of a nylon selected from nylon 4,6 (poly(tetramethylene adipamide)), nylon 6 (polycaprolactam), nylon 6,6 (poly(hexamethylene adipamide)),nylon 6,9(poly(hexamethylene nonanediamide)), nylon 6,10 (poly(hexamethylene sebacamide)), nylon 6,12 (poly(hexamethylene dodecanediamide)), nylon 6/12 (poly(caprolactam-co-dodecanediamide)), nylon 6,6/6 (poly(hexamethylene adipamide-co-caprolactam)), nylon 11 (polyundecanolactam), nylon 12 (polyauryllactam) or alloys or mixtures thereof; and between 0% (wt.) to 29% (wt.) of an amorphous nylon.

25. A multilayer film structure as claimed in any preceding claim, wherein said oxygen gas barrier is such that said film has an oxygen transmission rate less than 15.5 cc/m² for 24 hours at 1 atmosphere as measured in accordance with ASTM D-3985 test method.

26. A multilayer film structure as claimed in any preceding claim, wherein said third layer and said seventh layer are each independently selected from modified or unmodified homopolymer or copolymer of polyethylene, methyl acrylate,ethyl acrylate, n-butyl acrylate, ethylene vinyl acetate, ethylene vinyl acetate copolymers,ethylene-alpha olefin or blends thereof.

27. A multilayer film structure as claimed in any preceding claim, wherein said peel strength is less than 0.58N per mm (1500 grams per inch) as measured in accordance with ASTM F-904 test method.

28. A multilayer film structure as claimed in claim 27, wherein said peel strength is between 0.19N per mm (500 grams per inch) to 0.39N per mm (1000 grams per inch) as measured in accordance with ASTM F-904 test method.

29. A multilayer film structure as claimed in any preceding claim, wherein said first layer is selected from ionomer, polyethylene, heterogeneous ethylene-alpha olefin copolymer, homogeneous ethylene-alpha olefin copolymer, low-density polyethylene, linear low-density polyethylene and ultra low-density polyethylene,ethylene vinyl acetate copolymer, ethylene methyl acrylate copolymer, ethylene propylene copolymer, polypropylene homopolymer and copolymer, polybutylene homopolymer and copolymer, propylene-alpha olefin copolymers, polyethylene terephthalate, nylon, or blends thereof.

30. A multilayer film structure as claimed in any preceding claim, wherein said film has an elongation at break at room temperature greater than 250% in the machine direction and greater than 250% in the transverse direction as measured in accordance with ASTM D-2732-96 test method.

31. A multilayer film structure as claimed in any preceding claim , further including a ninth layer coextruded between said second layer and said third layer, or between said third layer and said fourth layer, said ninth layer comprising a polyolefin or an adhesive.

32. A multilayer film structure as claimed in claim 31, wherein said ninth layer is a polyolefin selected from polyethylene, ethylene vinyl acetate,ethylene-alpha olefin copolymers, polypropylene, polybutene or blends or copolymers thereof.

33. A multilayer coextruded film structure as claimed in claim 31 or claim 32, including an internal failure mechanism, and comprising:
a) a first layer having a maximum thickness of 6.35µm (0.25 mils);
b) a second layer coextruded adjacent to said first layer and comprising a first polymeric component selected from polyethylene, EVA, ionomer, adhesive material or blends thereof and a second polymeric component selected from polybutylene, polypropylene, high-density polyethylene or blends thereof;
c) a third layer coextruded adjacent to said second layer and comprising a material selected from a modified or unmodified homopolymer or copolymer of ethylene, methyl acrylate, ethyl acrylate, n-butyl acrylate, ethylene vinyl acetate, ethylene vinyl acetate copolymers, ethylene-alpha olefins or blends thereof;
d) a fourth layer coextruded adjacent to said third layer and comprising a material selected from an adhesive material or a polyolefin;
e) a fifth layer coextruded adjacent to said fourth layer and comprising a nylon selected from nylon 4,6 (poly(tetramethylene adipamide)),nylon 6 (polycaprolactam), nylon 6,6 (poly(hexamethylene adipamide)), nylon 6,9 (poly(hexamethylene nonanediamide)), nylon 6,10 (poly(hexamethylene sebacamide)), nylon 6,12 (poly(hexamethylene dodecanediamide)), nylon 6/12 (poly(caprolactam-co-do-decanediamide)),nylon 6,6/6 (poly(hexamethylene adipamide-co-caprolactam)), nylon 11 (polyundecanolactam), nylon 12 (polyauryllactam) or alloys or mixtures thereof;
f) a sixth layer coextruded adjacent to said fifth layer and comprising a material selected from an adhesive material or an oxygen gas barrier material;
g) a seventh layer coextruded adjacent to said sixth layer and comprising a nylon selected from nylon 4,6(poly(tetramethylene adipamide)), nylon 6(polycaprolactam), nylon6,6(poly(hexamethyleneadipamide)),nylon6,9(poly(hexame thylenenonanediamide)),nylon6,10(poly(hexamethylenesebacami de)), nylon 6,12 (poly(hexamethylene dodecanediamide)), nylon 6/12 (poly(caprolactam-co-do- decanediamide)), nylon 6,6/6 (poly(hexamethylene adipamide-co-caprolactam)), nylon 11 (polyundecanolactam), nylon 12 (polyauryllactam) or alloys or mixtures thereof;
h) an eighth layer coextruded adjacent to said seventh layer and comprising an adhesive selected from a modified or unmodified homopolymer or copolymer of ethylene, methyl acrylate, ethyl acrylate, n-butyl acrylate, ethylene vinyl acetate, ethylene vinyl acetate copolymers, ethylene-alpha olefins or blends thereof; and,
i) a ninth layer coextruded adjacent to said eighth layer and comprising a material selected from polyethylene, polypropylene, polyester, nylon or blends and copolymers thereof;
wherein said multilayer coextruded film structure has a total thickness from 50.8 to 381µm (2 to 15 mils.).

## Patentansprüche

1. Mehrschichtige coextrudierte thermoplastische Filmstruktur (Folienstruktur), umfassend in der folgenden Abfolge bzw. Reihenfolge:
a) eine erste Schicht, umfassend ein Polymerversiegelungsmaterial;
b) eine zweite Schicht, umfassend eine zerbrechliche Polymermischung;
c) eine dritte Schicht, umfassend ein Haftmaterial (Klebstoffmaterial);
d) eine vierte Schicht, umfassend ein Nylon;
e) eine fünfte Schicht, umfassend ein Material, ausgewählt aus einem Haftmaterial (Klebstoffmaterial) oder einem Sauerstoffgassperrschichtmaterial (Sauerstoffgasbarrierematerial);
f) eine sechste Schicht, umfassend ein Nylon,
g) eine siebte Schicht, umfassend ein Haftmaterial (Klebstoffmaterial); und
h) eine achte Schicht, umfassend ein Material, ausgewählt aus Polyethylen, Polypropylen, Polyester, Nylon oder Mischungen und Copolymeren davon;
wobei die erste Schicht mit der zweiten bis achten Schicht coextrudiert ist, wobei die erste Schicht 1 % bis 10 % der gesamte Dicke der coextrudierten Filmstruktur ausmacht, wobei die erste Schicht eine Abweichung in der Einheitlichkeit der Dicke von weniger als 20 % der Durchschnittsdicke der ersten Schicht aufweist; wobei die zweite Schicht eine maximale Dicke von 12,7 µm (0,5 mils.) aufweist; und wobei die mehrschichtige Filmstruktur eine Schälfestigkeit von weniger als 0,77 N pro mm (2.000 g pro inch) aufweist, bestimmt gemäß der Testmethode nach ASTM F-904 bei Schälen von einer zweiten Filmstruktur, an welcher die mehrschichtige Filmstruktur heißversiegelt worden ist.

2. Mehrschichtige Filmstruktur nach Anspruch 1, wobei der Film durch Einblasencoextrusion oder Schlauchblasencoextrusion hergestellt ist.

3. Mehrschichtige Filmstruktur nach Anspruch 1 oder Anspruch 2, wobei die erste Schicht eine äußere Oberflächenschicht des Films ist und eine Dicke von weniger als 3,81 µm (0,1535 mils.) aufweist.

4. Mehrschichtige Filmstruktur nach einem der vorangehenden Ansprüche, wobei die zweite Schicht direkt mit der ersten Schicht verbunden ist.

5. Mehrschichtige Filmstruktur nach einem der vorangehenden Ansprüche, wobei der Film eine Dicke von weniger als 381 µm (15 mils.) aufweist.

6. Mehrschichtige Filmstruktur nach Anspruch 5, wobei der Film eine Dicke von weniger als 254 µm (10 mils.) aufweist.

7. Mehrschichtige Filmstruktur nach Anspruch 6, wobei der Film eine Dicke von 76,2 µm (30 mils.) bis 177,8 µm (7 mils.) aufweist.

8. Mehrschichtige Filmstruktur nach einem der vorangehenden Ansprüche, wobei der Film einen Wärmeschrumpfwert von weniger als 5 % in Maschinenrichtung bei 90 °C und von weniger als 5 % in Querrichtung bei 90 °C aufweist, bestimmt gemäß der Testmethode nach ASTMD-2732-96.

9. Mehrschichtige Filmstruktur nach Anspruch 8, wobei der Film einen Wärmeschrumpfwert von weniger als 2 % in Maschinenrichtung bei 90 °C und von weniger als 2 % in Querrichtung bei 90 °C aufweist, bestimmt gemäß der Testmethode nach ASTMD-2732-96.

10. Mehrschichtige Filmstruktur nach einem der vorangehenden Ansprüche, wobei der Film weniger als 500 ppm eines Übergangsmetallsalzes enthält, ausgewählt aus Mangan II, Mangan III, Eisen II, Eisen III, Cobalt II, Cobalt III, Nickel II, Nickel III, Kupfer I, Kupfer II, Rhodium II, Rhodium III, Rhodium IV oder Ruthenium.

11. Mehrschichtige Filmstruktur nach einem der vorangehenden Ansprüche, wobei der Film einen Glanzwert von mehr als 560 Hunter-Einheiten (*Hunter Units* bzw. HU) aufweist, bestimmt gemäß der Testmethode nach ASTM D-523.

12. Mehrschichtige Filmstruktur nach einem der vorangehenden Ansprüche, wobei die achte Schicht einen Polyester umfaßt, ausgewählt aus einem Homopolymer oder Copolymer eines aromatischen Esters oder einer Mischung davon.

13. Mehrschichtige Filmstruktur nach Anspruch 12, wobei die achte Schicht ausgewählt ist aus einem Homopolymer oder Copolymer von Ethylenterephthalat, Ethylennaphthalat oder Mischungen davon.

14. Mehrschichtige Filmstruktur nach einem der Ansprüche 1 bis 11, wobei die achte Schicht ein Nylon ist, ausgewählt aus Nylon-4,6-(poly(tetramethylenadipamid)), Nylon-6-(polycaprolactam), Nylon-6,6-(poly(hexamethylenadipamid)), Nylon-6,9-(poly(hexamethylennonandiamid)), Nylon-6,10-(poly(hexamethylensebacamid)), Nylon-6,12-(poly(hexamethylendodecandiamid)), Nylon-6/12-(poly(caprolactam-co-dodecandiamid)), Nylon-6,6/6-(poly(hexamethylenadipamid-co-caprolactam)), Nylon-11-(polyundecanolactam), Nylon-12-(polylauryllactam) oder Verbundmaterialien oder Mischungen davon.

15. Mehrschichtige Filmstruktur nach Anspruch 14, wobei die achte Schicht eine Mischung von 100 Gew.-% bis 71 Gew.-% eines Nylons, ausgewählt aus Nylon-4,6-(poly(tetramethylenadipamid)), Nylon-6-(polycaprolactam), Nylon-6,6-(poly(hexamethylenadipamid)), Nylon-6,9-(poly(hexamethylennonandiamid)), Nylon-6,10-(poly(hexamethylensebacamid)), Nylon-6,12-(poly(hexamethylendodecandiamid)), Nylon-6/12-(poly(caprolactam-co-dodecandiamid)), Nylon-6,6/6-(poly(hexamethylenadipamid-co-caprolactam)), Nylon-11-(polyundecanolactam), Nylon-12-(polylauryllactam) oder Verbundmaterialien oder Mischungen davon; und 0 Gew.-% bis 29 Gew.-% eines amorphen Nylons ist.

16. Mehrschichtige Filmstruktur nach einem der vorangehenden Ansprüche, wobei der Film Verarbeitungsadditive (Verarbeitungshilfsmittel) umfaßt.

17. Mehrschichtige Filmstruktur nach einem der vorangehenden Ansprüche, wobei die zerbrechliche Polymermischung eine erste polymere Komponente, ausgewählt aus Polyethylen, EVA, Ionomer, Haftmaterial (Klebstoffmaterial) oder Mischungen davon, und eine zweite polymere Komponente, ausgewählt aus Polybutylen, Polypropylen, Polyethylen hoher Dichte oder Mischungen davon, umfaßt.

18. Mehrschichtige Filmstruktur nach Anspruch 17, wobei das Haftmaterial (Klebstoffmaterial) ausgewählt ist aus einem modifizierten oder unmodifizierten Homopolymer oder Copolymer von Ethylen, Methylacrylat, Ethylacrylat, n-Butylacrylat, Ethylenvinylacetat, Ethylenvinylacetatcopolymeren, Ethylen-alpha-Olefn oder Mischungen davon.

19. Mehrschichtige Filmstruktur nach Anspruch 17 oder 18, wobei die zweite polymere Komponente Polybutylen ist.

20. Mehrschichtige Filmstruktur nach einem der Ansprüche 17 bis 19, wobei die erste polymere Komponente 70 Gew.-% bis 95 Gew.-% der zweiten Schicht umfaßt.

21. Mehrschichtige Filmstruktur nach einem der vorangehenden Ansprüche, wobei die zweite Schicht eine Mischung aus 85 Gew.-% einer ersten polymeren Komponente und 15 Gew.-% Polybutylen umfaßt.

22. Mehrschichtige Filmstruktur nach einem der vorangehenden Ansprüche, wobei die fünfte Schicht eine Sauerstoffgassperrschicht ist, ausgewählt aus Ethylenvinylalkoholcopolymer, Polyvinylidenchloridcopolymer, Polyacrylnitril, Acrylnitrileopolymer oder Mischungen davon.

23. Mehrschichtige Filmstruktur nach einem der vorangehenden Ansprüche, wobei die vierte und sechste Schicht jeweils, unabhängig voneinander, ausgewählt sind aus Nylon-4,6-(poly(tetramethylenadipamid)), Nylon-6-(polycaprolactam), Nylon-6,6-(poly(hexamethylenadipamid)), Nylon-6,9-(poly(hexamethylennonandiamid)), Nylon-6,10-(poly(hexamethylensebacamild)), Nylon-6,12-(poly(hexamethylendodecandiamid)), Nylon-6/12-(poly(caprolactam-co-dodecandiamid)), Nylon-6,6/6-(poly(hexamethylenadipamid-co-caprolactam)), Nylon-11-(polyundecanolactam), Nylon-12-(polylauryllactam) oder Verbundmaterialien oder Mischungen davon.

24. Mehrschichtige Filmstruktur nach Anspruch 23, wobei die vierte und sechste Schicht jeweils, unabhängig voneinander, eine Mischung von 100 Gew.-% bis 71 Gew.-% eines Nylons, ausgewählt aus Nylon-4,6-(poly(tetramethylenadipamid)), Nylon-6-(polycaprolactam), Nylon-6,6-(poly(hexamethylenadipamid)), Nylon-6,9-(poly(hexamethylennonandiamid)), Nylon-6,10-(poly(hexamethylensebacamid)), Nylon-6,12-(poly(hexamethylendodecandiamid)), Nylon-6/12-(poly(caprolactam-co-dodecandiamid)), Nylon-6,6/6-(poly(hexamethylenadipamid-co-caprolactam)), Nylon-11-(polyundecanolactam), Nylon-12-(polylauryllactam) oder Verbundmaterialien oder Mischungen davon; und 0 Gew.-% bis 29 Gew.-% eines amorphen Nylons umfaßt.

25. Mehrschichtige Filmstruktur nach einem der vorangehenden Ansprüche, wobei die Sauerstoffgassperre (Sauerstoffgasbarriere) derart ist, daß der Film eine Sauerstoffdurchlaßrate von weniger als 15,5 cm³/m² pro 24 Stunden bei 1 Atmosphäre aufweist, bestimmt gemäß der Testmethode nach ASTM D-3985.

26. Mehrschichtige Filmstruktur nach einem der vorangehenden Ansprüche, wobei die dritte Schicht und die siebte Schicht jeweils, unabhängig voneinander, ausgewählt sind aus einem modifizierten oder unmodifizierten Homopolymer oder Copolymer von Polyethylen, Methylacrylat, Ethylacrylat, n-Butylacrylat, Ethylenvinylacetat, Ethylenvinylacetatcopolymeren, Ethylen-alpha-Olefin oder Mischungen davon.

27. Mehrschichtige Filmstruktur nach einem der vorangehenden Ansprüche, wobei die Schälfestigkeit (Schälstärke) weniger als 0,58 N pro mm (1.500 g pro inch) beträgt, bestimmt gemäß der Testmethode nach ASTM F-904.

28. Mehrschichtige Filmstruktur nach Anspruch 27, wobei die Schälfestigkeit 0,19 N pro mm (550 g pro inch) bis 0,39 N pro mm (1.000 g pro inch) beträgt, bestimmt gemäß der Testmethode nach ASTM F-904.

29. Mehrschichtige Filmstruktur nach einem der vorangehenden Ansprüche, wobei die erste Schicht ausgewählt ist aus Ionomer, Polyethylen, heterogenem Ethylen-alpha-Olefin-Copolymer, homogenem Ethylen-alpha-Olefin-Copolymer, Polyethylen geringer Dichte, linearem Polyethylen geringer Dichte und Polyethylen ultrageringer Dichte, Ethylenvinylacetatcopolmer, Ethylenmethylacrylatcopolymer, Ethylenpropylencopolymer, Polypropylenhomopolymer und -copolymer, Polybutylenhomopolymer und -copolymer, Propylen-alpha-Olefin-Copolymeren, Polyethylenterephthalat, Nylon und Mischungen davon.

30. Mehrschichtige Filmstruktur nach einem der vorangehenden Ansprüche, wobei der Film eine Bruchdehnung bei Raumtemperatur von mehr als 250 % in Maschinenrichtung und mehr als 250 % in Querrichtung aufweist, bestimmt gemäß der Testmethode nach ASTM D-2732-96.

31. Mehrschichtige Filmstruktur nach einem der vorangehenden Ansprüche, weiterhin aufweisend eine neunte Schicht, welche zwischen der zweiten Schicht und der dritten Schicht oder zwischen der dritten Schicht und der vierten Schicht coextrudiert ist, wobei die neunte Schicht ein Polyolefin oder ein Haftmaterial (Klebstoff) umfaßt.

32. Mehrschichtige Filmstruktur nach Anspruch 31, wobei die neunte Schicht ein Polyolefin ist, ausgewählt aus Polyethylen, Ethylenvinylacetat, Ethylen-alpha-Olefin-Copolymeren, Polypropylen, Polybuten oder Mischungen oder Copolymeren davon.

33. Mehrschichtige Filmstruktur nach Anspruch 31 oder Anspruch 32, aufweisend einen internen Bruchmechanismus und umfassend:
a) eine erste Schicht mit einer maximalen Dicke von 6,35 µm (0,25 mils.);
b) eine zweite Schicht, coextrudiert an die erste Schicht und umfassend eine erste polymere Komponente, ausgewählt aus Polyethylen, EVA, Ionomer, Haftmaterial (Klebstoffmaterial) oder Mischungen davon, und eine zweite polymere Komponente, ausgewählt aus Polybutylen, Polypropylen, Polyethylen hoher Dichte oder Mischungen davon;
c) eine dritte Schicht, coextrudiert an die zweite Schicht und umfassend ein Material, ausgewählt aus einem modifizierten oder unmodifizierten Homopolymer oder Copolymer von Ethylen, Methylacrylat, Ethylacrylat, n-Butylacrylat, Ethylenvinylacetat, Ethylenvinylacetatcopolymeren, Ethylen-alpha-Olefinen oder Mischungen davon;
d) eine vierte Schicht, coextrudiert an die dritte Schicht und umfassend ein Material, ausgewählt aus einem Haftmaterial (Klebstoffmaterial) und einem Polyolefin;
e) eine fünfte Schicht, coextrudiert an die vierte Schicht und umfassend ein Nylon, ausgewählt aus Nylon-4,6-(poly(tetramethylenadipamid)), Nylon-6-(polycaprolactam), Nylon-6,6-(poly(hexamethylenadipamid)), Nylon-6,9-(poly(hexamethylennonandiamid)), Nylon-6,10-(poly(hexamethylensebacamid)), Nylon-6,12-(poly(hexamethylendodecandiamid)), Nylon-6/12-(poly(caprolactam-co-dodecandiamid)), Nylon-6,6/6-(poly(hexamethylenadipamid-co-caprolactam)), Nylon-11-(polyundecanolactam), Nylon-12-(polylauryllactam) oder Verbundmaterialien oder Mischungen davon;
f) eine sechste Schicht, coextrudiert an die fünfte Schicht und umfassend ein Material, ausgewählt aus einem Haftmaterial (Klebstoffmaterial) und einem Sauerstoffgassperrschichtmaterial;
g) eine siebte Schicht, coextrudiert an die sechste Schicht und umfassend ein Nylon, ausgewählt aus Nylon-4,6-(poly(tetramethylenadipamid)), Nylon-6-(polycaprolactam), Nylon-6,6-(poly(hexamethylenadipamid)), Nylon-6,9-(poly(hexamethylennonandiamid)), Nylon-6,10-(poly(hexamethylensebacamid)), Nylon-6,12-(poly(hexamethylendodecandiamid)), Nylon-6/12-(poly(caprolactam-co-dodecandiamid)), Nylon-6,6/6-(poly(hexamethylenadipamid-co-caprolactam)), Nylon-11-(polyundecanolactam), Nylon-12-(polylauryllactam) oder Verbundmaterialien oder Mischungen davon;
h) eine achte Schicht, coextrudiert an die siebte Schicht und umfassend ein Haftmaterial (Klebstoff), ausgewählt aus einem modifizierten oder unmodifizierten Homopolymer oder Copolymer von Ethylen, Methylacrylat, Ethylacrylat, n-Butylacrylat, Ethylenvinylacetat, Ethylenvinylacetatcopolymer, Ethylen-alpha-Olefinen oder Mischungen davon; und
i) eine neunte Schicht, coextrudiert an die achte Schicht und umfassend ein Material, ausgewählt aus Polyethylen, Polypropylen, Polyester, Nylon oder Mischungen und Copolymeren davon;
wobei die mehrschichtige coextrudierte Filmstruktur eine Gesamtdicke von 50,8 bis 381 µm (2 bis 15 mils.) aufweist.

## Revendications

1. Structure de film thermoplastique multicouche coextrudé comprenant, dans l'ordre suivant :
a) une première couche comprenant une matière polymère d'étanchéité ;
b) une deuxième couche comprenant un mélange polymère frangible ;
c) une troisième couche comprenant une matière adhésive ;
d) une quatrième couche comprenant un nylon ;
e) une cinquième couche comprenant une matière choisie parmi une matière adhésive ou une matière de barrière pour l'oxygène gazeux ;
f) une sixième couche comprenant un nylon ;
g) une septième couche comprenant une matière adhésive ; et
h) une huitième couche comprenant une matière choisie parmi polyéthylène, polypropylène, polyester, nylon ou leurs mélanges et copolymères ;
dans laquelle la dite première couche est coextrudée avec les dites deuxième à huitième couches, la dite première couche représente de 1% à 10% de l'épaisseur totale de la dite structure de film coextrudé, la dite première couche a un écart d'uniformité d'épaisseur inférieur à 20% de l'épaisseur moyenne de la dite première couche ; la dite deuxième couche a une épaisseur maximale de 12,7 µm (0,5 mils) ; et la dite structure de film multicouche a une résistance au pelage inférieure à 0,77 N par mm (2000 grammes par inch), mesurée conformément à la méthode de test ASTM F-904, lorsqu'elle est décollée d'une deuxième structure de film à laquelle la dite structure de film multicouche a été soudée à chaud.

2. Structure de film multicouche selon la revendication 1, dans laquelle le dit film est produit par coextrusion à bulle unique ou soufflage tubulaire.

3. Structure de film multicouche selon la revendication 1 ou la revendication 2, dans laquelle la dite première couche est une couche de surface extérieure du dit film et elle a une épaisseur inférieure à 3,81 µm (0,15 mils).

4. Structure de film multicouche selon une quelconque des revendications précédentes, dans laquelle la dite deuxième couche est directement collée à la dite première couche.

5. Structure de film multicouche selon une quelconque des revendications précédentes, dans laquelle le dit film a une épaisseur inférieure à 381 µm (15 mils).

6. Structure de film multicouche selon la revendication 5, dans laquelle le dit film a une épaisseur inférieure à 254 µm (10 mils).

7. Structure de film multicouche selon la revendication 6, dans laquelle le dit film a une épaisseur comprise entre 76,2 µm (3 mils) et 177,8 µm (7 mils).

8. Structure de film multicouche selon une quelconque des revendications précédentes, dans laquelle le dit film a une valeur de contraction à chaud inférieure à 5% dans la direction de machine à 90°C, et inférieure à 5% dans la direction transversale à 90°C, mesurée conformément à la méthode de test ASTM D-2732-96.

9. Structure de film multicouche selon la revendication 8, dans laquelle le dit film a une valeur de contraction à chaud inférieure à 2% dans la direction de machine à 90°C et inférieure à 2% dans la direction transversale à 90°C, mesurée conformément à la méthode de test ASTM D-2732-96.

10. Structure de film multicouche selon une quelconque des revendications précédentes, dans laquelle le dit film contient moins de 500 ppm d'un sel de métal de transition choisi parmi manganèse II, manganèse III, fer II, fer III, cobalt II, cobalt III, nickel II, nickel III, cuivre I, cuivre II, rhodium II, rhodium III, rhodium IV ou ruthénium.

11. Structure de film multicouche selon une quelconque des revendications précédentes, dans laquelle le dit film a une valeur de brillance supérieure à 65 unités Hunter (Hu), mesurée conformément à la méthode de test ASTM D-523.

12. Structure de film multicouche selon une quelconque des revendications précédentes, dans laquelle la dite huitième couche comprend un polyester choisi parmi un homopolymère ou un copolymère d'un ester aromatique, ou un mélange de ceux-ci.

13. Structure de film multicouche selon la revendication 12, dans laquelle la dite huitième couche est choisie parmi un homopolymère ou un copolymère de téréphtalate d'éthylène, de naphtalate d'éthylène ou de leurs mélanges.

14. Structure de film multicouche selon une quelconque des revendications 1 à 11, dans laquelle la dite huitième couche est un nylon choisi parmi nylon 4,6 (poly(tétraméthylène adipamide)), nylon 6 (polycaprolactame), nylon 6,6 (poly (hexaméthylène adipamide)), nylon 6,9 (poly (hexaméthylène nonane diamide)), nylon 6,10 (poly (hexaméthylène sébacamide)), nylon 6, 12 (poly (hexaméthylène dodécane diamide)) nylon 6/12 (poly (caprolactame-co-dodécane diamide)), nylon 6, 6/6 (poly(hexaméthylène adipamide-co-caprolactame)), nylon 11 (polyundécano lactame), nylon 12 (polyauryl lactame) ou leurs alliages ou mélanges.

15. Structure de film multicouche selon la revendication 14, dans laquelle la dite huitième couche est un mélange d'une quantité comprise entre 100% en poids et 71% en poids d'un nylon choisi parmi nylon 4,6 (poly(tétraméthylène adipamide)), nylon 6 (polycaprolactame), nylon 6,6 (poly (hexaméthylène adipamide)), nylon 6,9 (poly (hexaméthylène nonane diamide)), nylon 6,10 (poly (hexaméthylène sébacamide)), nylon 6, 12 (poly (hexaméthylène dodécane diamide)) nylon 6/12 (poly (caprolactame-co-dodécane diamide)), nylon 6, 6/6 (poly(hexaméthylène adipamide-co-caprolactame)), nylon 11 (polyundécano lactame), nylon 12 (polyauryl lactame) ou leurs alliages ou mélanges ;.et d'une quantité comprise entre 0% en poids et 29% en poids d'un nylon amorphe.

16. Structure de film multicouche selon une quelconque des revendications précédentes, dans laquelle le dit film comprend des additifs de traitement.

17. Structure de film multicouche selon une quelconque des revendications précédentes, dans laquelle le dit mélange polymère frangible comprend un premier composant polymère choisi parmi polyéthylène, EVA, ionomère, matière adhésive ou leurs mélanges, et un deuxième composant polymère choisi parmi polybutylène, polypropylène, polyéthylène haute densité ou leurs mélanges.

18. Structure de film multicouche selon la revendication 17, dans laquelle la dite matière adhésive est choisie parmi un homopolymère ou un copolymère modifié ou non modifié d'éthylène, méthyl acrylate, éthyl acrylate, n-butyl acrylate, éthylène-acétate de vinyle, copolymères d'éthylène - acétate de vinyle, éthylène-alpha-oléfines ou leurs mélanges.

19. Structure de film multicouche selon la revendication 17 ou la revendication 18, dans laquelle le dit deuxième composant polymère est le polybutylène.

20. Structure de film multicouche selon une quelconque des revendications 17 à 19, dans laquelle le dit premier composant polymère constitue de 70% à 95% en poids de la deuxième couche.

21. Structure de film multicouche selon une quelconque des revendications précédentes, dans laquelle la dite deuxième couche comprend un mélange de 85% en poids d'un premier composant polymère et de 15% en poids de polybutylène.

22. Structure de film multicouche selon une quelconque des revendications précédentes, dans laquelle la dite cinquième couche est une barrière d'arrêt de l'oxygène gazeux choisie parmi un copolymère d'éthylène-alcool vinylique, un copolymère de chlorure de polyvinylidène, un polyacrylonitrile, un copolymère d'acrylonitrile ou leurs mélanges.

23. Structure de film multicouche selon une quelconque des revendications précédentes, dans laquelle les dites quatrième et sixième couches sont choisies chacune de façon indépendante parmi nylon 4,6 (poly(tétraméthylène adipamide)), nylon 6 (polycaprolactame), nylon 6,6 (poly (hexaméthylène adipamide)), nylon 6,9 (poly (hexaméthylène nonane diamide)), nylon 6,10 (poly (hexaméthylène sébacamide)), nylon 6, 12 (poly (hexaméthylène dodécane diamide)) nylon 6/12 (poly (caprolactame-co-dodécane diamide)), nylon 6, 6/6 (poly(hexaméthylène adipamide-co-caprolactame)), nylon 11 (polyundécano lactame), nylon 12 (polyauryl lactame) ou leurs alliages ou mélanges.

24. Structure de film multicouche selon la revendication 1, dans laquelle les dites quatrième et sixième couches comprennent chacune de façon indépendante un mélange d'une quantité comprise entre 100% en poids et 71% en poids d'un nylon choisi parmi nylon 4,6 (poly(tétraméthylène adipamide)), nylon 6 (polycaprolactame), nylon 6,6 (poly (hexaméthylène adipamide)), nylon 6,9 (poly (hexaméthylène nonane diamide)), nylon 6,10 (poly (hexaméthylène sébacamide)), nylon 6, 12 (poly (hexaméthylène dodécane diamide)) nylon 6/12 (poly (caprolactame-co-dodécane diamide)), nylon 6, 6/6 (poly(hexaméthylène adipamide-co-caprolactame)), nylon 11 (polyundécano lactame), nylon 12 (polyauryl lactame) ou leurs alliages ou mélanges ; et d'une quantité comprise entre 0% en poids et 29% en poids d'un nylon amorphe.

25. Structure de film multicouche selon une quelconque des revendications précédentes, dans laquelle la dite barrière d'arrêt de l'oxygène gazeux est telle que le dit film possède une vitesse de transmission d'oxygène inférieure à 15,5 cm³/m² en 24 heures sous une pression de 1 atmosphère, mesurée conformément à la méthode de test ASTM D-3985.

26. Structure de film multicouche selon une quelconque des revendications précédentes, dans laquelle la dite troisième couche et la dite septième couche sont choisies chacune de façon indépendante à partir d'un homopolymère ou copolymère modifié ou non modifié de polyéthylène, méthyl acrylate, éthyl acrylate, n-butyl acrylate, éthylène-acétate de vinyle, copolymères d'éthylène-acétate de vinyle, éthylène-alpha oléfine, ou leurs mélanges.

27. Structure de film multicouche selon une quelconque des revendications précédentes, dans laquelle la dite résistance au pelage est inférieure à 0,58 N par mm (1500 grammes par inch), mesurée conformément à la méthode de test ASTM F-904.

28. Structure de film multicouche selon la revendication 27, dans laquelle la dite résistance au pelage est comprise entre 0,19 N par mm (500 grammes par inch) et 0,39 N par mm (1000 grammes par inch), mesurée conformément à la méthode de test ASTM F-904.

29. Structure de film multicouche selon une quelconque des revendications précédentes, dans laquelle la dite première couche est choisie parmi ionomère, polyéthylène, copolymère hétérogène d'éthylène-alpha oléfine, copolymère homogène d'éthylène-alpha oléfine, polyéthylène basse densité, polyéthylène basse densité linéaire et polyéthylène ultrabasse densité, copolymère d'éthylène - acétate de vinyle, copolymère d'éthylène - méthyl acrylate, copolymère d'éthylène - propylène, homopolymère et copolymère de polypropylène, homopolymère et copolymère de polybutylène, copolymères de propylène-alpha oléfine, téréphtalate de polyéthylène, nylon ou leurs mélanges.

30. Structure de film multicouche selon une quelconque des revendications précédentes, dans laquelle le dit film a un allongement à la rupture à température ambiante supérieur à 250% dans la direction de machine et supérieur à 250% dans la direction transversale, mesuré conformément à la méthode de test ASTM D-2732-96.

31. Structure de film multicouche selon une quelconque des revendications précédentes, comprenant en outre une neuvième couche coextrudée entre la dite deuxième couche et la dite troisième couche, ou entre la dite troisième couche et la dite quatrième couche, la dite neuvième couche comprenant une polyoléfine ou un adhésif.

32. Structure de film multicouche selon la revendication 31, dans laquelle la dite neuvième couche est une polyoléfine choisie parmi polyéthylène, éthylène - acétate de vinyle, copolymères d'éthylène - alpha oléfine, polypropylène, polybutène, ou leurs mélanges ou copolymères.

33. Structure de film multicouche selon la revendication 31 ou la revendication 32, incluant un mécanisme de défaillance interne et comprenant :
a) une première couche ayant une épaisseur maximale de 6,35 µm (0,25 mils) ;
b) une deuxième couche coextrudée adjacente à la dite première couche et comprenant un premier composant polymère choisi parmi polyéthylène, EVA, ionomère, matière adhésive ou leurs mélanges, et un deuxième composant polymère choisi parmi polybutylène, polypropylène, polyéthylène haute densité ou leurs mélanges ;
c) une troisième couche coextrudée adjacente à la dite deuxième couche et comprenant une matière choisie parmi un homopolymère ou copolymère modifié ou non modifié d'éthylène, méthyl acrylate, éthyl acrylate, n-butyl acrylate, éthylène-acétate de vinyle, copolymères d'éthylène - acétate de vinyle, éthylène-alpha oléfines, ou leurs mélanges ;
d) une quatrième couche coextrudée adjacente à la dite troisième couche et comprenant une matière choisie parmi une matière adhésive ou une polyoléfine ;
e) une cinquième couche coextrudée adjacente à la dite quatrième couche et comprenant un nylon choisi parmi nylon 4,6 (poly(tétraméthylène adipamide)), nylon 6 (polycaprolactame), nylon 6,6 (poly (hexaméthylène adipamide)), nylon 6,9 (poly (hexaméthylène nonane diamide)), nylon 6,10 (poly (hexaméthylène sébacamide)), nylon 6, 12 (poly (hexaméthylène dodécane diamide)) nylon 6/12 (poly (caprolactame-co-dodécane diamide)), nylon 6, 6/6 (poly(hexaméthylène adipamide-co-caprolactame)), nylon 11 (polyundécano lactame), nylon 12 (polyauryl lactame) ou leurs alliages ou mélanges ;
f) une sixième couche coextrudée adjacente à la dite cinquième couche et comprenant une matière choisie parmi une matière adhésive ou une matière de barrière d'arrêt de l'oxygène gazeux ;
g) une septième couche coextrudée adjacente à la dite sixième couche et comprenant un nylon choisi parmi nylon 4,6 (poly(tétraméthylène adipamide)), nylon 6 (polycaprolactame), nylon 6,6 (poly (hexaméthylène adipamide)), nylon 6,9 (poly (hexaméthylène nonane diamide)), nylon 6,10 (poly (hexaméthylène sébacamide)), nylon 6,12 (poly (hexaméthylène dodécane diamide)) nylon 6/12 (poly (caprolactame-co-dodécane diamide)), nylon 6, 6/6 (poly(hexaméthylène adipamide-co-caprolactame)), nylon 11 (polyundécano lactame), nylon 12 (polyauryl lactame) ou leurs alliages ou mélanges ;
h) une huitième couche coextrudée adjacente à la dite septième couche et comprenant un adhésif choisi parmi un homopolymère ou copolymère modifié ou non modifié d'éthylène, méthyl acrylate, éthyl acrylate, n-butyl acrylate, éthylène - acétate de vinyle, copolymères d'éthylène - acétate de vinyle, éthylène - alpha oléfines, ou leurs mélanges ; et
i) une neuvième couche coextrudée adjacente à la dite huitième couche et comprenant une matière choisie parmi polyéthylène, polypropylène, polyester, nylon ou leurs mélanges et copolymères ;
dans laquelle la dite structure de film coextrudée multicouche a une épaisseur totale de 50,8 à 381 µm (2 à 15 mils).
